# EUROPÄISCHE PATENTSCHRIFT

(11) **EP 2 085 718 B1**
(45) Veröffentlichungstag und Bekanntmachung des Hinweises auf die Patenterteilung: **25.04.2012**
(21) Anmeldenummer: 09401001.4
(22) Anmeldetag: 04.02.2009
(51) Int. Cl.: F24J 3/08

(54) **Erdwärmeanlage**
Geothermal heat assembly
Installation de géothermie

(30) Priorität: 04.02.2008 DE 102008007627
(43) Veröffentlichungstag der Anmeldung: 05.08.2009
(73) Patentinhaber: Technische Universität Hamburg-Harburg, 21073 Hamburg (DE); TuTech Innovation GmbH, 21079 Hamburg (DE)
(72) Erfinder: Grabe, Jürgen, 21075 Hamburg (DE); Ma, Xiaolong, 21077 Hamburg (DE)
(74) Vertreter: Hansen, Jochen

(56) Entgegenhaltungen:
- WO-A-2009/039839
- GB-A- 1 455 457
- US-A- 4 448 237
- US-A- 5 370 182
- US-A1- 2003 010 652

## Beschreibung

Die Erfindung betrifft ein Verfahren zur thermischen Ausnutzung des Temperaturniveaus im Grundwasser beaufschlagten Untergrund mittels Erdwärmetauscher sowie eine Anordnung zur Durchführung eines Verfahrens nach einem der vorangehenden Ansprüche mit einer Erdwärmeanlage, die ein Zirkulationssystem eines Wärmeträgermediums aufweist, wobei im Zirkulationssystem in Zirkulationsrichtung des Wärmeträgermediums eine Vorlaufleitung, ein im mit Grundwasser beaufschlagten Untergrund angeordneter Erdwärmetauscher, eine Rücklaufleitung und oberirdischer Wärmetauscher vorgesehen sind.

Im Bereich der Gebäudeklimatisierung und -heizung ist es bekannt, das im Wesentlichen konstante Temperaturniveau des Untergrundes über geeignete Wärmetäuscher für Kühl- bzw. Heizzwecke zu nutzen. Dabei ist es bekannt, über sog. Erdwärmesonden, die in im Wesentlichen senkrechten Bohrungen im Untergrund installiert werden, Wärme dem Untergrund für Heizzwecke zu entziehen bzw. Wärme an den Untergrund zur Gebäudekühlung zu übertragen. Derartige Systeme haben den Vorteil, dass die Erdwärme im hier zu betrachtenden Umfang als "unerschöpflich" anzusehen ist. Die wirtschaftliche Ausnutzbarkeit der Erdwärme ist jedoch von der Wärmeleitfähigkeit und dem Wärmetransport im Untergrund entscheidend abhängig. Nur bei ausreichender Wärmeleitfähigkeit bzw. Wärmetransport kann eine Erdwärmesonde eine für ihren Einsatzzweck erforderliche Wärmemenge dem Untergrund entziehen bzw. auf den Untergrund übertragen.

Ferner sind sog. Energiepfähle bekannt, die in einem Gründungspfahl integrierte Erdwämekollektorrohre enthalten. Die Energiepfähle dienen wie herkömmliche Gründungspfähle bei schlecht tragendem Untergrund zur Bauwerksgründung. Da für Hochbauten aus statischen Gründen bei schlecht tragendem Untergrund Gründungspfähle erforderlich sind, können mit nur geringen Mehrkosten diese Energiepfähle statt herkömmlicher Gründungspfähle in den Boden zur Nutzung der oberflächennahen Geothermie eingebracht werden. Entsprechend den geologischen Voraussetzungen im Untergrund kann mit diesen Energiepfählen dem Untergrund für die Gebäudebeheizung Wärme entzogen oder für die Gebäudekühlung Wärme zugeführt werden.

Da gerade bei diesen oberflächennahen geothermischen Anlagen die Wärmeübertragung im Wesentlichen im Bereich der Grundwasserzone liegt und die Wärmeleitfähigkeit des Untergrundes meist sehr klein ist, wird die Effektivität derartiger Erdwärmeanlagen insbesondere durch den advektiven Wärmetransport durch Grundwasserströmung beeinflusst.

Die US 5,370,182 behandelt die Erdwärmeproduktion aus einer Salzstock-Kaverne, wobei in einem offenen Zirkulationssystem durch die Kaverne eine Salzlauge zirkuliert wird. In der US 5,370,182 wird beschrieben, dass komprimierte Luft bzw. inertes Gas über Kompressor eingeleitet wird, um eine möglichst gute Wärmedämmung zwischen den koaxial zueinander angeordneten Rohren für die Injektion und die Produktion der wärmetechnisch auszunutzenden Salzlauge zu erreichen. Da üblicherweise lange Rohrleitungen gewisse Undichtigkeiten aufweisen, wird die Luft stets unter einem bestimmten Druck gehalten, so dass in den Isolationsbereichen der Flüssigkeitsspiegel möglichst nahe am untersten Ende der Verrohrung liegt.

Weiter beschreibt die US 2003/0010652 A1 ein Verfahren zur verbesserten Wärmeproduktion aus geothermischen Quellen zur geothermischen Elektrizitätserzeugung. In diesem Verfahren soll ein Kryogen unter hohem Druck in ein U-Rohr oder ein offenes Rohr eines Wärmetauschers injiziert werden.

Die US 4,448,237 betrifft ein System zum effektiven Wärmeaustausch mit Grundwasser in einem Grundwasserleiter. Grundsätzlich handelt es sich um wenigstens eine verrohrte Bohrung mit einer Filterstrecke.

Aus der WO 2009/039839 A1 ist eine Anlage zur Förderung und die Dekontamination von Grundwasser mit einem in einer Bohrung eines Brunnens bevorzugt zentral angeordneten Hauptrohr bekannt, bei dem das Hauptrohr durch einen Querverschluss in einen oberen und einen unteren Teil unterteilt wird und der Querverschluss eine Öffnung aufweist, in der eine Pumpe angeordnet ist, die Wasser aus dem unteren Teil des Hauptrohres fördert und über ein Zirkulationssystem oberhalb wieder einleitet.

Ferner ist aus der DE 196 25 113 A1 ein Verfahren zur Verbesserung des Wärmeaustausches in einer Geothermiesonde bekannt. Die Geothermiesonde wird als geschlossenes System mit einem Mantelrohr zum Einbringen von zu erwärmenden Wasser und mit einem isolierten Innenrohr zum Ausbringen des erwärmten Wassers in Erdschichten eingebracht. Dabei soll die Gesteinswärme durch eine Konvektion verbessert nutzbar sein, indem die Geothermiesonde in eine mit einem fluiden Medium gefüllte Kaverne eingebracht wird.

Weiter ist aus der WO 85/03994 ein Verfahren und Tiefbohrbrunnen zur Gewinnung von geothermischer Energie bekannt, bei dem aus dem Tiefbohrbrunnen mit Hilfe eines geeigneten Wärmeträgermediums die geothermische Wärmeenergie auf die Erdoberfläche gefördert wird und nach einem Wärmeentzug das Wärmeträgermedium in die Erde zurückgepresst wird. Dabei wird das Wärmeträgermedium in einem im gleichen Tiefbohrbrunnen ausgebildeten System aus der Erde herausgefördert und in die Erde zurückgepresst. Dabei werden der nach oben strömende geförderte und der nach unten strömende zurückgepresste Wärmeträgerstrom voneinander wärmeisoliert geführt und das Wärmeträgermedium in eine solche Bodenschicht zurückgepresst, die von der Förderschicht des Wärmeträgermediums durch eine die unmittelbare Verbindung der beiden Schichten in der Umgebung des Tiefbohrbrunnens verhindernde, doch in einer größeren horizontalen Entfernung den hydraulischen Kontakt gegebenenfalls zulassende Sperrschicht getrennt.

Ferner ist auf einem ganz anderen technischen Gebiet für sog. Altlastensanierung und Grundwasserschadensfälle das Verfahren des Grundwasser-Zirkulations-Brunnens (kurz GZB oder auch LIB für Luftinjektionsbrunnen genannt) bekannt, bei dem innerhalb eines speziellen Brunnens über intensive Luftdurchmischung eine Zirkulation des Grundwassers im Untergrund angeregt wird. Durch das Lufteinpressen wird Grundwasser im Brunnen angesaugt und wieder abgegeben, was eine Reinigung des Grundwassers nach dem sog. "in Situ-Strippung" erlaubt. Durch den intensiven Luftdurchgang im Brunnen wird ein Luft-Wasser-Gemisch erzeugt, dessen Dichte kleiner als die des Wassers im umliegenden Untergrund (Grundwasserleiter) ist, so dass der Wasserspiegel innerhalb des Brunnens über den ursprünglichen Grundwasserspiegel hinaus ansteigt. Dadurch entsteht ein Überdruck im oberen Bereich des Brunnens, aus dem Wasser in den Grundwasserleiter abströmt, während im unteren Bereich ein Unterdruck herrscht, wodurch seitlich Wasser zuströmt. Folglich wird im Grundwasserleiter eine von oben nach unten gerichtete Zirkulationsströmung erzeugt.

Bei den bekannten Grundwassersanierungsverfahren nach der GZB-Methode findet beim Kontakt zwischen Luftblasen und Wasser eine intensive Ausgasung der im Wasser enthaltenen leicht flüchtigen Bestandteile statt. Dies können beispielsweise leicht flüchtige Chlor-Kohlenwasserstoffe sein. Die mit diesen Stoffen angereicherte Luft wird über einen Filter, beispielsweise ein Aktivkohlefilter, geleitet und abgereinigt.

Ausgehend von den bekannten Erdwärmeanlagen, insbesondere Erdwärmesonden und Energiepfähle, ist es Aufgabe der vorliegenden Erfindung, die Wärmeübertragung zu verbessern.

Gelöst wird diese Aufgabe mit dem Verfahren gemäß Anspruch 1 und der Anordnung gemäß Anspruch 6.

Durch die Kombation von bekannten Erdwärmeanlagen mit gleichzeitiger Anwendung des Prinzips der Grundwasser-Zirkulations-Brunnen wird eine die Wärmeübertragung zwischen Erdwärmesonde und dem Untergrund überlagernde, erzwungene, großräumige Grundwasserzirkulation im Grundwasserleiter erzeugt, die zu einem erhöhten advektiven Wärmetransport durch die erzwungene Grundwasserströmung führt. Entsprechend erhöht die künstlich erzeugte Zirkulationsströmung die Leistung der Erdwärmeanlage.

Bevorzugt wird, die Grundwasserzirkulation durch Einblasen von Gas, insbesondere Luft, in einen im Untergrund vorgesehenen Brunnen erzeugt. Vorrichtungsgemäß wird dies mit einer Anordnung erreicht, bei dem der Erdwärmetauscher in oder nahe bei einem im Untergrund vorgesehenen Brunnen angeordnet ist und im Brunnen eine Druckluftleitung vorgesehen ist, die am abwärtigen Ende eine Ausblasöffnung und am aufwärtigen Ende einen Luftkompressor aufweist.

Beim Betrieb einer derartigen Anlage wird Luft durch den Kompressor möglichst nahe der Brunnensohle in das im Brunnen stehende Grundwasser gepresst. Die Luftinjektion im Brunnen erzeugt innerhalb des Brunnen- oder Filterrohres ein Luft-Wasser-Gemisch, dessen Dichte kleiner als die des Wassers im umliegenden Untergrund (Grundwasserleiter) ist. Damit steigt der Wasserspiegel innerhalb des Brunnens über den ursprünglichen Grundwasserspiegel hinaus. Es entsteht ein Überdruck im oberen Bereich des Brunnens, aus dem Wasser in den Grundwasserleiter abströmt, während im unteren Bereich ein Unterdruck herrscht, wodurch seitlich Wasser zuströmt. Im Grundwasserleiter wird dadurch eine großräumige Zirkulationsströmung von oben großräumig in die Umgebung des Brunnens nach unten erzeugt. Innerhalb des Brunnen- bzw. Filterrohres entsteht eine vertikale Strömung des Luft-Wasser-Gemisches von unten nach oben.

In einer bevorzugten Ausführungsform kann der Erdwärmetaucher eine Erdwärmesonde sein, die im Brunnen angeordnet ist. Die Erdwärmesonde wird abweichend von der üblichen Verwendung der Erdwärmesonden in der Bohrung nicht mit festem Füllmaterial, häufig Zement, verfüllt, sondern der Brunnen wird als Grundwasserbrunnen offengehalten. Entsprechend ist gegenüber der üblichen Montage einer Erdwärmesonde zusätzlich ein Filterrohr, eine Druckluftleitung und ein Luftkompressor zur Luftinjektion vorzusehen. Dieser Mehraufwand wird jedoch durch eine erhebliche Effizienzsteigerung bei der Wärmeübertragung schnell armortisiert.

Nach ersten Abschätzungen dürfte die Leistung einer vorangehend beschriebenen Anordnung in einem Brunnenrohr mit erzwungener Grundwasserzirkulation um 30 % bis 60 % gegenüber einer Erdwärmesondenanordnung in einer normalen verfüllten Bohrung verbessert werden. Dagegen steht der Leistungsaufwand für den Luftkompressor, der deutlich unter 5 % liegen dürfte.

Alternativ kann das anmeldungsgemäße Verfahren auch in einer Anordnung mit einem Bauwerksgründungspfahl mit integrierten Wärmetauscherrohrleitungen, einem sog. Energiepfahl, angewendet werden. Dabei ist jedoch eine zusätzliche Brunnenbohrung zur erzwungenen Grundwasserzirkulation nahe dem im Baugrund eingebrachten Bauwerksgründungspfahl vorzusehen.

Bei beiden Ausführungen dient die im Untergrund großräumig erzeugte Zirkulationsströmung des Grundwasser dazu, dass die in den Untergrund eingeführte Wärme schneller abgeführt wird, was somit zu einer verbesserten Regeneration des Erdwärmetauschers führt. Der gleiche Effekt ergibt sich bei einer Wärmeabführung aus dem Untergrund, also bei der Wärmegewinnung über Wärmepumpen für Heizzwecke, bei dem die Untergrundwärme als abzukühlendes Temperaturniveau verwendet wird. Auch hierbei wird die Regeneration durch die erzwungene Grundwasserzirkulationsströmung verbessert.

Um die gesamte Brunnenstrecke für die Zirkulationserzeugung zu nutzen, wird die Grundwasserzirkulation durch Einblasen von Gas, insbesondere Luft, in einen im Untergrund vorgesehenen Brunnen erzeugt. Entsprechend ist die Ausblasöffnung nahe der Brunnensohle angeordnet. Bevorzugt ist die Ausblasöffnung ein Membranbelüfter.

Wenn der Brunnenkopf abgedichtet wird und die aus dem im Brunnen stehenden Grundwasser austretende Luft thermisch verwertet wird, kann zusätzlich noch die im Brunnen etwa auf das Temperaturniveau des Grundwassers gebrachte Luft energetisch sinnvoll genutzt werden. Dies kann insbesondere dadurch erfolgen, dass bei einer Wärme-/Kältenutzung für eine Klimaanlage die im Grundwasser erwärmte bzw. gekühlte Luft als Klimaanlagenzuluft thermisch verwendet wird. Vorrichtungsgemäß ist dafür oberhalb des Grundwasserspiegels im Brunnen eine Abdichtung vorgesehen, durch die eine Entlüftungsleitung geführt ist. Ferner ist die Entlüftungsleitung mit ihrem stromabwärtigen Ende zum oberirdischen Wärmetauscher geführt.

Selbstverständlich kann die auf etwa Grundwassertemperatur gebrachte Luft auch über einen gesonderten Luftwärmetauscher geführt werden, um beispielsweise in einem Gebäude zugeführte Frischluft im Winter vorzuwärmen und im Sommer vorzukühlen.

Nachfolgend wird ein bevorzugtes Ausführungsbeispiel der Erfindung anhand der beiliegenden Zeichnung detailliert beschrieben.

Darin zeigt:

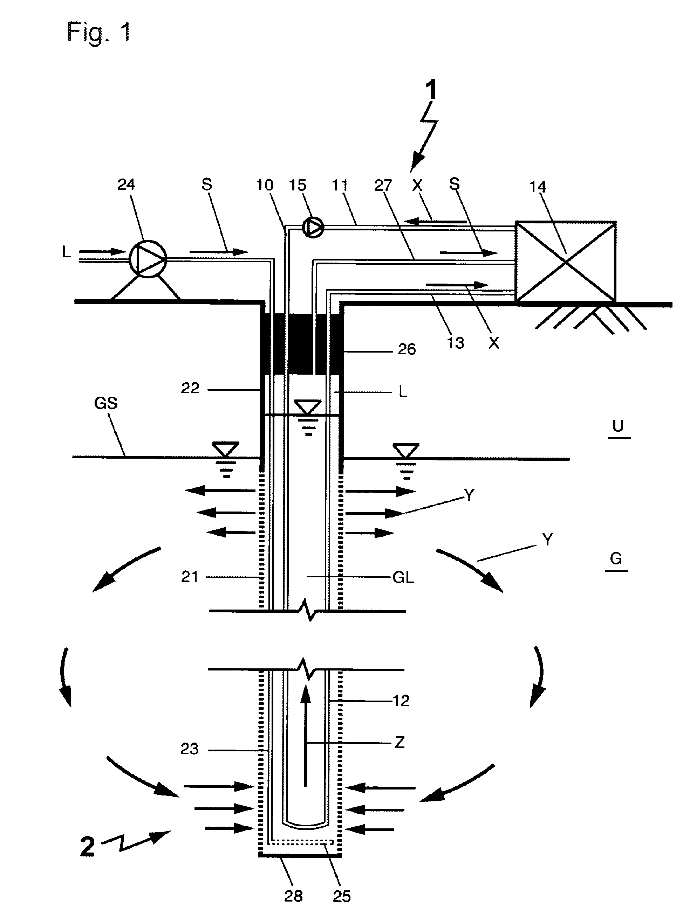

- Fig. 1: in einer schematischen Schnittdarstellung die anmeldungsgemäße Anordnung.

In einem Vertikalschnitt durch den Untergrund U ist das Prinzip der Anordnung zur thermischen Ausnutzung des Temperaturniveaus dargestellt. Im Untergrund U ist eine Bohrung für einen Brunnen 2 eingebracht. In einer bestimmten Tiefe liegt ein Grundwasserspiegel GS. Der Brunnen 2 weist bis kurz unterhalb des Grundwasserspiegels GS ein Vollrohr 22 und darunter ein Filterrohr 21 zur Offenhaltung der Bohrung auf. Das Filterrohr 21 reicht bis zur tiefsten Stelle des Brunnens 2, der Brunnensohle 28. Im Brunnen 2 ist eine Druckluftleitung 23 eingeführt, die bis zur Brunnensohle 28 führt und dort eine Ausblasöffnung 25, beispielsweise in Form eines Membranbelüfters, aufweist, der eine feinblasige Luftausgabe sicherstellt. Am der Ausblasöffnung 25 gegenüberliegenden Ende der Druckluftleitung 23 ist ein Kompressor 24 außerhalb des Brunnens 2 angeordnet. Der Kompressor 24 saugt Umgebungsluft an, komprimiert diese und drückt sie über die Druckluftleitung 23 in Strömungsrichtung S in den Brunnen 2 zur Ausblasöffnung 25.

Ferner ist im Brunnen 2 ein Erdwärmetauscher 12 in Form einer Erdwärmesonde eingeführt. Die Erdwärmesonde 12 besteht aus wenigstens einer Rohrschlaufe, die möglichst bis zur Brunnensohle 28 in den Brunnen 2 eingeführt ist. Der Erdwärmetauscher in Form der Erdwärmesonde 12 gehört zu einem Zirkulationssystem 1 einer Erdwärmeanlage, die ein Wärmeträgermedium 10, beispielsweise Wasser, in einem Rohrsystem zirkuliert. In Zirkulationsrichtung X des Zirkulationssystems 1 führt eine Vorlaufleitung 11 zum Brunnen 2 zu einer Seite der Erdwärmesonde 12. In der Vorlaufleitung 11 ist eine Zirkulationspumpe 15 zum Zirkulieren des Wärmeträgermediums 10 in Zirkulationsrichtung X eingefügt. Am anderen Ende der Erdwärmesonde 12 ist eine Rücklaufleitung 13 angeordnet, die zu einem oberirdischen Wärmetauscher 14, beispielsweise für eine Klimaanlage oder eine Wärmepumpe, führt. Von diesem oberirdischen Wärmetauscher 14 führt wiederum die Vorlaufleitung 11 zum Erdwärmetauscher 12, womit das Zirkulationssystem 1 geschlossen ist.

Zur Erzeugung der gewünschten Grundwasserzirkulation wird nun Luft über den Kompressor 24 und Druckluftleitung 23 zur Ausblasöffnung 25 an der Brunnensohle 28 gepresst. Die an der Ausblasöffnung 25 austretende Luft wird vom Grundwasser G aufgenommen und bildet ein Wasser-Luft-Gemisch GL, das eine geringere Dichte als das Grundwasser im Untergrund U aufweist. Entsprechend steigt der Wasserspiegel im Brunnen 2 über den Grundwasserspiegel GS, wie dies in Fig. 1 dargestellt ist.

Aufgrund der Dichteunterschiede zwischen dem Wasser-Luft-Gemisch GL und dem Grundwasser G entsteht im unteren Bereich des Brunnens 2 ein Unterdruck, während im oberen Bereich nahe des Grundwasserspiegels GS ein Überdruck im Brunnen 2 entsteht. Aufgrund dieser Druckunterschiede bildet sich eine großräumige Zirkulationsstörung im Untergrund U vom oberen Ende des Brunnens 2 zum unteren Ende des Brunnens 2. Diese Strömung ist in Fig. 1 mit Pfeil Y als Grundwasserzirkulationsrichtung dargestellt. Innerhalb des Brunnens 2 bildet sich eine entsprechende Ausgleichsströmung, nämlich die mit Pfeil Z bezeichnete Grundwasserzirkulationsrichtung im Brunnen aus.

Diese vertikale Strömung Z des Luft-Wasser-Gemisches GL innerhalb des Brunnens 2 von der Brunnensohle 28 nach oben gerichtet erhöht den Wärmeaustausch zwischen dem Grundwasser und der Erdwärmesonde 12, da neben der Wärmeleitung zusätzlich advektive Wärmetransporte nutzbar werden. Ebenso führt die erzeugte Grundwasserzirkulation Y im Grundwasserleiter zu einem schnelleren und großräumigeren Wärmetransport. Dies führt zu einer verbesserten Regeneration der Erdwärmesonde und somit zu einer Effizienzsteigerung der Erdwärmeanlage.

### Bezugszeichenliste

- 1: Zirkulationssystem
- 10: Wärmeträgermedium
- 11: Vorlaufleitung
- 12: Erdwärmetauscher
- 13: Rücklaufleitung
- 14: oberirdischer Wärmetauscher
- 15: Zirkulationspumpe

- 2: Brunnen
- 21: Filterrohr
- 22: Vollrohr
- 23: Druckluftleitung
- 24: Kompressor
- 25: Ausblasöffnung
- 26: Abdichtung
- 27: Entlüftungsleitung
- 28: Brunnensohle

- L: Luft
- G: Grundwasser
- GL: Grundwasser-Luft-Gemisch
- S: Strömungsrichtung Luft
- U: Untergrund, Grundwasserleiter
- X: Zirkulationsrichtung Wärmeträgermedium
- Y: Grundwasserzirkulationsrichtung im Untergrund
- Z: Grundwasserzirkulationsrichtung im Brunnen

## Patentansprüche

1. Verfahren zur thermischen Ausnutzung des Temperaturniveaus im Grundwasser beaufschlagten Untergrund mittels Erdwärmetauscher, **dadurch gekennzeichnet, dass** im Untergrund im Bereich der Erdwärmetauscher durch Einblasen von Gas eine erzwungene Grundwasserzirkulation erzeugt wird.

2. Verfahren nach Anspruch 1, **dadurch gekennzeichnet, dass** die Grundwasserzirkulation durch Einblasen von Luft in einen im Untergrund vorgesehenen Brunnen erzeugt wird.

3. Verfahren nach Anspruch 2, **dadurch gekennzeichnet, dass** die Luft nahe der Brunnensohle in das im Brunnen stehende Grundwasser eingeblasen wird.

4. Verfahren nach Anspruch 2 oder 3, **dadurch gekennzeichnet, dass** der Brunnenkopf abgedichtet wird und die aus dem im Brunnen stehenden Grundwasser austretende Luft thermisch verwertet wird.

5. Verfahren nach Anspruch 4, **dadurch gekennzeichnet, dass** bei einer Nutzung für eine Klimaanlage die im Grundwasser gekühlte bzw. erwärmte Luft als Klimaanlagenzuluft thermisch verwendet wird.

6. Anordnung zur Durchführung eines Verfahrens nach einem der vorangehenden Ansprüche mit einer Erdwärmeanlage, die ein Zirkulationssystem (1) eines Wärmeträgermediums (10) aufweist, wobei im Zirkulationssystem (1) in Zirkulationsrichtung (X) des Wärmeträgermediums (10) eine Vorlaufleitung (11), ein unterhalb eines Grundwasserspiegels (GS) im mit Grundwasser (G) beaufschlagten Untergrund (U) angeordneter Erdwärmetauscher (12), eine Rücklaufleitung (13) und ein oberirdischer Wärmetauscher (14) vorgesehen sind, **dadurch gekennzeichnet, dass** der Erdwärmetauscher (12) in oder nahe bei einem im Untergrund (U) vorgesehenen Brunnen (2) angeordnet ist und im Brunnen (2) eine Druckluftleitung (23) vorgesehen ist, die am abwärtigen Ende eine Ausblasöffnung (25) und am aufwärtigen Ende einen Luftkompressor (24) aufweist, wobei der Brunnen (2) bis kurz unterhalb des Grundwasserspiegels (GS) ein Vollrohr (22) und darunter ein Filterrohr (21) zur Offenhaltung der Bohrung aufweist.

7. Anordnung nach Anspruch 6, **dadurch gekennzeichnet, dass** der Erdwärmetauscher (12) eine Erdwärmesonde ist.

8. Anordnung nach Anspruch 7, **dadurch gekennzeichnet, dass** eine oder mehrere Erdwärmesonden (12) im Brunnen (2) angeordnet sind.

9. Anordnung nach Anspruch 6, **dadurch gekennzeichnet, dass** der Erdwärmetauscher (12) ein Bauwerksgründungspfahl mit integrierten Wärmetauscherrohrleitungen ist.

10. Anordnung nach Anspruch 9, **dadurch gekennzeichnet, dass** ein oder mehrere Brunnen (2) neben dem Bauwerksgründungspfahl im Untergrund (U) eingebracht sind.

11. Anordnung nach einem der Ansprüche 6 bis 10, **dadurch gekennzeichnet, dass** oberhalb des Grundwasserspiegels im Brunnen (2) eine Abdichtung (26) vorgesehen ist, durch die eine Entlüftungsleitung (27) geführt ist.

12. Anordnung nach Anspruch 11, **dadurch gekennzeichnet, dass** die Entlüftungsleitung (27) mit ihrem stromabwärtigen Ende zum oberirdischen Wärmetauscher (14) geführt ist.

13. Anordnung nach einem der vorangehenden Ansprüche, **dadurch gekennzeichnet, dass** die Ausblasöffnung (25) nahe der Brunnensohle (28) angeordnet ist.

14. Anordnung nach Anspruch 13, **dadurch gekennzeichnet, dass** die Ausblasöffnung (25) ein Membranbelüfter ist.

## Claims

1. A method of thermal utilization by means of a geothermal heat exchanger of the temperature level in the subsurface acted upon by groundwater, **characterised in that** an enforced groundwater circulation is produced in the subsurface in the region of the geothermal heat exchanger through gas being blown in.

2. A method according to claim 1, **characterised in that** the groundwater circulation is produced through air being blown into a well provided in the subsurface.

3. A method according to claim 2, **characterised in that** the air is blown into the groundwater in the well close to the well bottom.

4. A method according to claim 2 or 3, **characterised in that** the well top is sealed and the air issuing from the groundwater in the well is utilised thermally.

5. A method according to claim 4, **characterised in that** in the event of utilization for an air-conditioning system, the air cooled or heated in the groundwater is used thermally as supply air for the air conditioning system.

6. An arrangement for carrying out a method according to any one of the preceding claims with a geothermal system having a circulation system (1) of a heat transfer medium (10), wherein in the circulation system (1) there are provided, in the circulation direction (X) of the heat transfer medium (10), a supply line (11), a geothermal heat exchanger (12) which is arranged in the subsurface (U) acted upon by groundwater (G) so as to be below a groundwater level (GS), a return line (13) and an aboveground heat exchanger (14), **characterised in that** the geothermal heat exchanger (12) is arranged in or near a well (2) provided in the subsurface (U) and a compressed-air line (23) is provided in the well (2) and has an exhaust opening (25) at the downwards end and an air compressor (24) at the upwards end, wherein the well (2) has a full pipe (22) to just below the groundwater level (GS) and thereunder a filtering pipe (21) to keep the bore open.

7. An arrangement according to claim 6, **characterised in that** the geothermal heat exchanger (12) is a geothermal probe.

8. An arrangement according to claim 7, **characterised in that** one or a plurality of geothermal probes (12) are arranged in the well (2).

9. An arrangement according to claim 6, **characterised in that** the geothermal heat exchanger (12) is a structural foundation pile with integrated heat exchanger pipelines.

10. An arrangement according to claim 9, **characterised in that** one or a plurality of wells (2) are housed in the subsurface (U) so as to be beside the structural foundation pile.

11. An arrangement according to any one of claims 6 to 10, **characterised in that** a seal (26) is provided in the well (2) so as to be above the groundwater level, through which seal there is guided an air vent pipe (27).

12. An arrangement according to claim 11, **characterised in that** the downstream end of the air vent pipe (27) is guided to the underground heat exchanger (14).

13. An arrangement according to any one of the preceding claims, **characterised in that** the exhaust opening (25) is arranged close to the well bottom (28).

14. An arrangement according to claim 13, **characterised in that** the exhaust opening (25) is a membrane aerator.

## Revendications

1. Procédé d'utilisation thermique du niveau de température dans le sous-sol alimenté en eaux souterraines au moyen d'échangeurs de chaleur géothermique, **caractérisé en ce qu'**une circulation forcée des eaux souterraines est provoquée par soufflement de gaz dans le sous-sol au niveau des échangeurs de chaleur géothermique.

2. Procédé selon la revendication 1, **caractérisé en ce que** la circulation des eaux souterraines est provoquée par soufflement d'air dans un puit prévu dans le sous-sol.

3. Procédé selon la revendication 2, **caractérisé en ce que** l'air est soufflé à proximité du fond du puit dans les eaux souterraines situées dans le puit.

4. Procédé selon la revendication 2 ou 3, **caractérisé en ce que** la tête de puit est étanchéifiée et l'air sortant des eaux souterraines situées dans le puit est utilisé thermiquement.

5. Procédé selon la revendication 4, **caractérisé en ce que**, lors d'une utilisation dans une installation de climatisation, l'air refroidi ou réchauffé dans les eaux souterraines est utilisé thermiquement en tant qu'air d'alimentation.

6. Dispositif de mise en oeuvre d'un procédé selon l'une des revendications précédentes, avec une installation de chaleur géothermique qui est munie d'un système de circulation (1) d'un fluide caloporteur (10), dans lequel système de circulation (1) sont prévus, dans le dans la direction de circulation (X) du fluide caloporteur (10), une conduite d'entrée (11), un échangeur de chaleur géothermique (12) disposé en dessous d'un niveau des eaux souterraines (GS) dans le sous-sol (U) alimenté en eaux souterraines (G), une conduite de retour (13) et un échangeur de chaleur en surface (14), **caractérisé en ce que** l'échangeur de chaleur géothermique (12) est disposé dans ou à proximité d'un puit (2) prévu dans le sous-sol (U) et une conduite d'air comprimé (23) est prévue dans le puit (2), laquelle conduite d'air comprimé est munie à l'extrémité avale d'une ouverture de soufflement (25) et à l'extrémité amont d'un compresseur d'air (24), le puit (2), pour maintenir ouvert le forage, présentant jusque juste en dessous du niveau des eaux souterraines (GS) un tube monobloc (22) et en dessous d'un tube-filtre (21).

7. Dispositif selon la revendication 6, **caractérisé en ce que** l'échangeur de chaleur (12) est une sonde géothermique.

8. Dispositif selon la revendication 7, **caractérisé en ce qu'**une ou plusieurs sondes thermiques sont placées dans le puit (2).

9. Dispositif selon la revendication 6, **caractérisé en ce que** l'échangeur de chaleur géothermique (12) est une pile de fondation de bâtiment avec des conduites d'échange de chaleur intégrées.

10. Dispositif selon la revendication 9, **caractérisé en ce qu'**un ou plusieurs puits (2) sont installés dans le sous-sol (U) à côté de la pile de fondation du bâtiment.

11. Dispositif selon l'une des revendications 6 à 10, **caractérisé en ce qu'**un dispositif d'étanchéité est prévu dans le puit (2) au-dessus du niveau des eaux souterraines au travers duquel passe une conduite d'évent (27).

12. Dispositif selon la revendication 11, **caractérisé en ce que** la conduite d'évent (27) est menée avec son extrémité avale à l'échangeur de chaleur en surface (14).

13. Dispositif selon l'une des revendications précédentes, **caractérisé en ce que** l'ouverture de soufflement (25) est disposée à proximité du fond (28) du puit.

14. Dispositif selon la revendication 13, **caractérisé en ce que** l'ouverture de soufflement (25) est un aérateur à membrane.
